Europäisches Patentamt

European Patent Office

Office européen des brevets

(19)

(11) Numéro de publication : **0 063 058**
**B1**

(12) **FASCICULE DE BREVET EUROPÉEN**

(45) Date de publication du fascicule du brevet :
18.06.86

(51) Int. Cl.⁴ : **B 62 B 7/08**

(21) Numéro de dépôt : 82400386.7

(22) Date de dépôt : 05.03.82

(54) **Voiture réversible pour enfant.**

(30) Priorité : 03.04.81 FR 8106730
12.06.81 FR 8111616

(43) Date de publication de la demande :
20.10.82 Bulletin 82/42

(45) Mention de la délivrance du brevet :
18.06.86 Bulletin 86/25

(84) Etats contractants désignés :
BE DE GB

(56) Documents cités :
FR-A- 2 293 350
FR-A- 2 394 434
FR-A- 2 394 435
FR-A- 2 406 555
FR-A- 2 458 443
FR-A- 2 462 323
FR-A- 2 464 172
US-A- 4 065 177

(73) Titulaire : **AMPAFRANCE S.A.**
**119, Rue de Paris**
**F-92107 Boulogne-Billancourt Cedex (FR)**

(72) Inventeur : **Coueille, Daniel**
**23 avenue de la Marne**
**F-49300 Cholet (FR)**
Inventeur : **Surot, Patrick**
**"Le Tremblay" Chemin de la Boulinière**
**F-49300 Cholet (FR)**

(74) Mandataire : **Bardehle, Heinz, Dipl.-Ing. et al**
**Patent- und Rechtsanwälte Bardehle-Pagen-**
**berg-Dost-Altenburg & Partner Postfach 86 06 20**
**D-8000 München 86 (DE)**

## Description

La présente invention se rapporte à une voiture réversible, à changement de direction, pour enfant.

On connaît une disposition permettant de rendre une voiture réversible consistant dans le basculement des bras servant au déplacement de la voiture. A cet effet, les deux bras parallèles de déplacement de la voiture sont rendus pivotants autour d'un axe géométrique fixe. Par exemple, dans le document FR-A-2 394 435, deux bras sont montés pivotants sur une noix centrale par rapport à laquelle ils peuvent être immobilisés angulairement par un moyen de verrouillage porté par chaque bras et propre à venir coopérer directement avec la noix associée.

Il doit être remarqué que les deux positions différentes de déplacement de la voiture s'obtiennent sans aucun changement de la position du siège, donc de l'enfant qui occupe ce siège et qui regarde, soit la route, soit la mère.

La présente invention vise une voiture réversible par changement de direction par basculement des bras qui soit d'un fonctionnement absolument sûr pour l'enfant transporté tout en restant d'une construction simple.

Suivant un premier aspect de l'invention, une poussette réversible pour enfant, à changement de direction obtenu par basculement de deux bras servant au déplacement de la voiture, cette voiture comprenant un piètement composé de deux paires de branches latérales supportant les roues et comprenant chacune au moins deux moyens de maintien de retenue disposés angulairement par rapport aux axes fixes autour desquels les deux bras sont montés à basculement, chaque bras étant reçu dans l'un ou l'autre des moyens de retenue suivant la position de réversibilité choisie, est caractérisée en ce que les moyens de maintien ou de retenue sont des gouttières assurant le maintien par une action de clip, chaque paire de gouttières étant solidaire d'un flasque latéral.

Suivant un second aspect de l'invention, une voiture réversible pour enfant, à changement de direction obtenu par basculement de deux bras servant au déplacement de la voiture, cette voiture comprenant un piètement composé de deux paires de branches latérales supportant les roues et comprenant chacune au moins deux moyens de maintien ou de retenue disposés angulairement par rapport aux axes fixes autour desquels les deux bras sont montés à basculement, chaque bras étant reçu dans l'un ou l'autre moyen de maintien ou de retenue suivant la position de réversibilité choisie, est caractérisée en ce que les bras de déplacement, ou cannes pivotantes, sont articulés sur une noix centrale traversée par les branches et susceptibles d'être immobilisés dans l'une ou l'autre des deux positions de réversibilité, le prolongement inférieur de chaque bras au-delà de la noix centrale rencontrant l'une des branches de piètement, chaque moyen de maintien ou de retenue étant prévu au point de rencontre d'au moins une branche de la paire des branches et du bras pivotant correspondant.

Suivant une forme de réalisation particulière de ce second aspect de l'invention, les moyens de maintien ou de retenue sont constitués par des clips recevant et maintenant les bras pivotants.

Suivant une variante, les moyens de maintien ou de retenue sont constitués chacun par un support en saillie percé d'un trou borgne qui est destiné à recevoir l'extrémité du bras pivotant, lequel, en plus de son basculement, est susceptible de coulisser sur sa longueur.

La voiture réversible selon l'invention porte des longerons de support de hamac ou de nacelle, lesquels sont montés pivotants et sont réglables en position.

Les longerons de support de hamac ou de nacelle peuvent recevoir, par exemple, un « couchage » constitué par un, deux ou trois éléments, à savoir : un duvet, un duvet et capote, et une « chaussette » ou étui.

La voiture pliante peut être une charrette ou une poussette pliante dite « canne », du type comportant deux « X » de pliage disposés entre les branches de piètement qui portent les moyens de maintien ou de retenue des bras et les roues de roulement.

D'autres caractéristiques et avantages de la présente invention ressortiront de la description qui va suivre, faite en regard des dessins annexés sur lesquels :

la figure 1 est une vue en élévation éclatée d'un flasque latéral et d'une portion de bras de basculement, partiellement en coupe ;

les figures 2 et 3 sont des schémas montrant les bras de basculement en position face mère et en position face route respectivement ;

la figure 4 est une vue en perspective d'une voiture du type charrette équipée conformément à l'invention et en position face route ;

la figure 4A est une vue de détail de la voiture représentée à la figure 4 ;

la figure 5 est une vue en perspective d'une poussette canne, à cannes pivotantes, équipée conformément à l'invention ;

la figure 5A est une vue de détail d'une variante ; et

la figure 6 représente, en perspective et partiellement, un détail d'une autre forme de réalisation du pivotement et de la retenue en position d'une canne basculante.

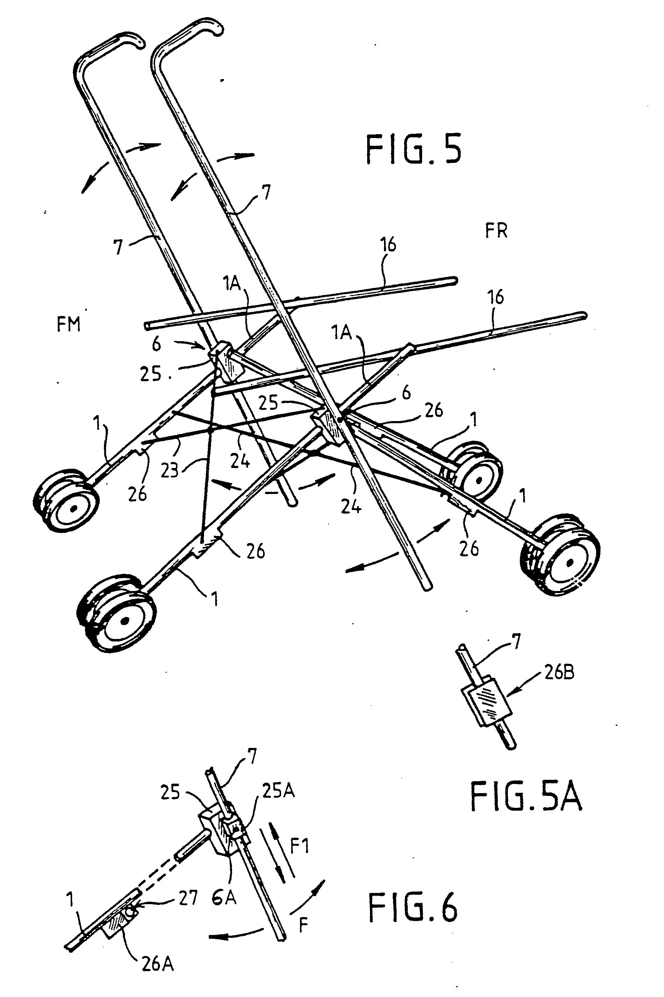

Dans la forme de réalisation représentée aux figures 1 à 4, la voiture réversible, face route, face mère, montre un piètement articulé comprenant deux paires de longerons (1) porteurs de roues et articulés sur deux montants principaux (2) disposés de chaque côté de la voiture.

Un flasque (3) est fixé sur chaque montant principal (2) et comprend deux moyens de maintien ou gouttières (4) et (5) disposées angulairement par rapport à un axe fixe (6).

Les axes fixes (6) constituent des axes de basculement pour une paire de bras de déplacement (7) comportant chacun une poignée (8). Chaque bras (7) porte un doigt de verrouillage (10) monté élastiquement sur un ressort (11) disposé à l'intérieur du bras, entre celui-ci et une tête légèrement conique (12) dudit doigt (10) laquelle tête se bloque sous l'action du ressort, dans une ouverture (13) pratiquée dans le bras.

Chaque doigt de verrouillage (10) muni d'un anneau de manœuvre (10A) est susceptible de venir s'enclencher, au choix, dans deux trous (14) et (15) correspondant chacun à une position déterminée du bras (7) sur son axe de basculement (6) et pratiqués dans le flasque (3). Les gouttières (4) et (5) montrent des encoches (4A) et (5A) permettant de dégager les trous (14) et (15).

Dans chacune des deux positions le bras (7) se trouve lui-même prisonnier de l'une des gouttières (4) ou (5) en s'y enclenchant.

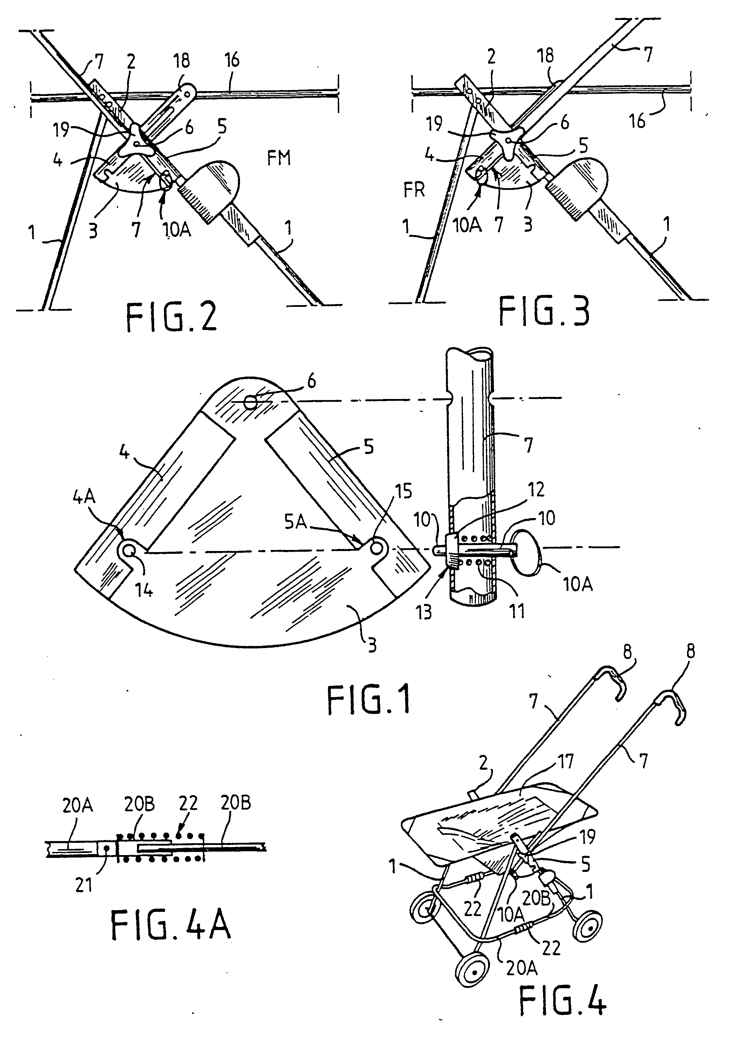

Dans la position du bras (7) correspondant à l'alignement : axe (6) ; bras (7) dans la gouttière (4) ; doigt (10) verrouillé dans le trou (14), le bras (7) est immobilisé en position (FM) de réversibilité face à la route (figure 3).

Dans la position du bras (7) correspondant à l'alignement : axe (6) ; bras (7) dans la gouttière (5) ; doigt (10) verrouillé dans le trou (15), le bras (7) est immobilisé en position (FR) de réversibilité face à la mère (figure 2).

Il doit être remarqué que la réversibilité de la voiture est obtenue sans changement de position d'aucune autre pièce de la voiture, hormis les bras basculants (7), de sorte qu'il suffit de faire basculer les bras (7) d'une position à l'autre pour obtenir le déplacement de la voiture, afin que l'enfant puisse regarder, soit la route, soit la mère.

Sur les montants principaux (2) est monté pivotant un cadre (16) prévu pour porter un siège quelconque (17) constitué par exemple par une nacelle, un hamac ou un baquet, formant siège en position assise et formant couchette en position couchée. Le cadre (16) est relié aux axes (6) par des coulisses (18) articulées audit cadre, de sorte que celui-ci peut occuper une inclinaison variable autour des axes (6) et l'immobilisation de ce cadre peut être obtenue à l'aide d'écrous de serrage papillon ou à ailettes (19) venant se visser sur lesdits axes (6) lesquels écrous de serrage contribuent de surcroît et simultanément, au verrouillage des bras (7) dans la position choisie.

La figure 4 représente, à titre d'exemple, l'ensemble de la voiture dans la position correspondant à celle de la figure 3, le siège (17) étant en position couchée face à la route (FR).

Le piètement de la voiture comprend un cadre en deux parties (20A-20B) articulées en (21) dont une partie (20B) offre la particularité d'être munie de deux suspensions centrales télescopiques à ressorts (22) (figures 4 et 4A).

Il doit être précisé que les flasques (3) conformes à l'invention, à gouttières disposées angulairement, peuvent équiper aussi bien une voiture d'enfant du type charrette à piètement repliable qu'une poussette pliante dite canne.

La voiture pliante réversible représentée à la figure 5 est une poussette dite « canne » comportant des entretoises en « X » (23) et (24) reliant entre elles les branches (1) les deux paires de branches portant les roues du piètement.

Dans cette disposition, les branches d'une paire de branches sont fixées chacune à une noix centrale (25) et la traverse pour constituer des prolongements de support pour un longeron (16) de hamac ou de nacelle. Les longerons (16) sont montés pivotants sur des prolongements (1A) de la paire de branches considérée.

L'autre paire de branches du piètement est montée pivotante sur les noix centrales (25).

Les cannes de poussée (7) sont montées pivotantes sur les axes (6) portés par les noix centrales (25), les deux axes (6) étant dans le prolongement géométrique horizontal l'un de l'autre.

Le basculement de ces cannes pivotantes autour des axes (6-6) assure la réversibilité de la voiture sans changer la position de l'enfant dans le hamac ou la nacelle.

Dans la position « face route » (FR) les cannes basculantes (7) rencontrent et sont maintenues par un moyen de retenue (26) prévu sur chacune des branches d'une paire de branches considérée. Ce moyen de rencontre et de retenue est constitué par un clip retenant la canne pivotante lorsque celle-ci s'est enfoncée dans ledit clip.

Une disposition semblable est prévue sur l'autre paire de branches à l'effet de recevoir et de retenir les cannes pivotantes (7) en position « face mère » (FM).

Sans sortir du cadre de l'invention il est possible d'envisager un moyen de rencontre et de retenue (26B) sur la canne pivotante elle-même, le moyen étant, dans ce cas, double, de manière à pouvoir rencontrer, soit une branche d'une paire, soit la branche en vis-à-vis de l'autre paire (figure 5A).

Dans la forme de réalisation représentée partiellement sur la figure 6, chaque canne basculante (7) coopère avec un moyen de retenue (26A) constitué par un support en saillie sur une branche (1) d'une paire de branches de piètement, ce support en saillie étant percé d'un trou borgne (27) destiné à recevoir l'extrémité de la canne (7). A cet effet, la canne est susceptible de recevoir, outre son mouvement de basculement (F) un mouvement de coulissement (F1) à l'intérieur d'une noix auxiliaire (25A) montée à pivotement autour d'un axe (6A) fixé sur la noix principale (25).

Dans l'une et l'autre de ces formes de réalisation les longerons de support de hamac ou de nacelle (16) sont susceptibles d'occuper toutes les positions choisies à l'extrémité des prolongements (1A) de branches et, en particulier, une position déterminée d'inclinaison correspondant à une position assise ou une autre position déterminée d'inclinaison correspondant à une position couchée de l'enfant.

Il peut être remarqué que dans ces formes de réalisation, celle-ci apporte une disposition de simplicité de construction et de fonctionnement sûr de la voiture réversible.

Tout moyen approprié peut être adopté pour régler la position angulaire des longerons (16) de hamac ou de nacelle par rapport aux prolongements (1A) de branches de piètement et les immobiliser dans la position choisie. Ces longerons sont susceptibles de porter, par exemple, un couchage comportant un duvet, un duvet et une capote et un étui dénommé chaussette.

## Revendications

1. Voiture réversible pour enfant, à changement de direction obtenu par basculement de deux bras (7) servant au déplacement de la voiture, laquelle voiture comprend un piètement composé de deux paires de branches latérales (1) supportant les roues et comprenant chacune au moins deux moyens de maintien ou de retenue (4, 5) disposés angulairement par rapport aux axes fixes (6) autour desquels les deux bras (7) sont montés à basculement, chaque bras (7) étant reçu dans l'un ou l'autre des moyens de retenue (4, 5) suivant la position de réversibilité choisie, caractérisée en ce que les moyens de maintien ou de retenue (4, 5) sont des gouttières assurant le maintien par une action de clip, chaque paire de gouttières étant solidaire d'un flasque latéral (3).

2. Voiture selon la revendication 1, caractérisée en ce que chaque bras basculant (7) porte un doigt de verrouillage (10) susceptible de venir s'enclencher, au choix, dans deux trous (14, 15) correspondant chacun à l'une des deux positions de réversibilité du bras et pratiqués dans le flasque (3) au voisinage des gouttières (4, 5).

3. Voiture réversible pour enfant, à changement de direction obtenu par basculement de . deux bras (7) servant au déplacement de la voiture, laquelle voiture comprend un piètement composé de deux paires de branches latérales (1) supportant les roues et comprenant chacune au moins deux moyens de maintien ou de retenue (26, 26A, 26B) disposés angulairement par rapport aux axes autour desquels les deux bras (7) sont montés à basculement, chaque bras étant reçu dans l'un ou l'autre des moyens de retenue suivant la position de réversibilité choisie, caractérisée en ce que les bras (7) de déplacement, ou cannes pivotantes, sont articulés sur une noix centrale (25) traversée par les branches (1) et susceptibles d'être immobilisés dans l'une ou l'autre des deux positions de réversibilité, le prolongement inférieur de chaque bras (7) au-delà de la noix centrale (25) rencontrant l'une des branches (1) de piètement, chaque moyen de maintien ou de retenue (26, 26A, 26B) étant prévu au point de rencontre d'au moins une branche (1) de la paire des branches et du bras pivotant (7) correspondants.

4. Voiture selon la revendication 3, caractérisée en ce que les moyens de maintien ou de retenue (26, 26A, 26B) sont du type à clip.

5. Voiture selon l'une des revendications 3 et 4, caractérisée en ce que le moyen de maintien ou de retenue est constitué par un support en saillie (26A) percé d'un trou (27) destiné à recevoir l'extrémité du bras pivotant (7), lequel, en plus de son basculement, est susceptible de coulisser sur sa longueur.

6. Voiture selon l'une des revendications 3 à 5, caractérisée en ce que les branches (1) d'une paire de branches sont fixées sur et traversent chacune la noix centrale (25), le prolongement supérieur (1A) desdites branches constituant le support d'un longeron (16) de hamac ou de nacelle, l'autre paire de branches du piètement pouvant être montée pivotante sur lesdites noix centrales (25) autour de l'axe 6.

7. Voiture selon l'une des revendications 3 à 6, caractérisée en ce que le bras pivotant (7) reçoit son mouvement de coulissement à l'intérieur d'une noix auxiliaire (25A) montée à pivotement sur ladite noix principale (25) autour de l'axe (6A).

8. Voiture selon l'une des revendications 3 et 4, caractérisée en ce que le moyen de maintien ou de retenue est prévu sur le bras (7) pivotant lui-même, ce moyen (26B) étant double de manière à pouvoir rencontrer soit une branche (1) d'une paire de branches, soit la branche (1) en vis-à-vis de l'autre paire de branches.

9. Voiture selon l'une des revendications 1 à 8, caractérisée en ce que des longerons (16) de support de hamac ou de nacelle comprennent un moyen de réglage de position angulaire et d'immobilisation dans cette position.

## Claims

1. A reversible carriage for a child, with a change in direction obtained by pivotal movement of two arms (7) which are provided for moving the carriage, the carriage comprising a support assembly formed by two pairs of side legs (1) supporting the wheels and each comprising at least two holding or retaining means (4, 5) which are disposed angularly with respect to the fixed axes (6) about which the two arms (7) are pivotally mounted, each arm (7) being received in one or other of the retaining means (4, 5) depending on the selected position of reversibility, characterised in that the holding or retaining means (4, 5) are channel portions providing the holding effect by a clip action, each pair of channel portions being fixed with respect to a side plate (3).

2. A carriage according to claim 1 characterised in that each pivotal arm (7) carries a locking finger (10) which is capable of engaging selectively into two holes (14, 15) each corresponding to one of the two positions of reversibility of the arm, the holes being provided in the side plate (3) in the vicinity of the channel portions (4, 5).

3. A reversible carriage for a child, with a change in direction obtained by pivotal movement of two arms (7) which are provided for moving the carriage, said carriage comprising a support assembly formed by two pairs of side legs (1) supporting the wheels and each comprising at least two holding or retaining means (26, 26A, 26B) which are disposed angularly with respect to the axes about which the two arms (7) are pivotally mounted, each arm being received in one or other of the retaining means depending on the selected position of reversibility, characterised in that the arms (7) for moving the carriage, or pivotal rods, are pivotally mounted on a central carrier member (25) through which the legs (1) pass, and the arms (7) are capable of being immobilised in one or other of the two positions of reversibility, the downward extension of each arm (7) beyond the central carrier member (25) meeting one of the support legs (1), each holding or retaining means (26, 26A, 26B) being provided at the point of meeting of at least one corresponding leg (1) of the pair of legs and the corresponding pivotal arm (7).

4. A carriage according to claim 3 characterised in that the holding or retaining means (26, 26A, 26B) are of the clip type.

5. A carriage according to one of claims 3 and 4 characterised in that the holding or retaining means is formed by a projecting support (26A) apertured with a hole (27) intended to receive the end of the pivotal arm (7), which, in addition to its pivotal movement, is capable of sliding along its length.

6. A carriage according to one of claims 3 to 5 characterised in that the legs (1) of a pair of legs are fixed on and each pass through the central carrier member (25), the upper extension (1A) of said legs forming the support for a hammock or body-supporting side member (16), while the other pair of legs of the support assembly can be mounted pivotally on said central carrier members (25) about the axis (6).

7. A carriage according to one of claims 3 to 6 characterised in that the pivotal arm (7) receives its sliding movement within an auxiliary carrier member (25A) mounted pivotally on said main carrier member (25) about the axis (6A).

8. A carriage according to one of claims 3 and 4 characterised in that the holding or retaining means is provided on the pivotal arm (7) itself, said means (26B) being double so as to be capable of meeting either a leg (1) of a pair of legs or the leg (1) in facing relationship of the other pair of legs.

9. A carriage according to one of claims 1 to 8 characterised in that side members (16) for supporting a body or hammock comprise a means for adjustment in respect of angular position and immobilisation in said position.

**Patentansprüche**

1. Umsteuerbarer Kinderwagen zum Richtungswechsel, der erhalten wird durch Kippung zweier Arme (7), die zur Fortbewegung des Wagens dienen, wobei der Wagen einen Fußteil aufweist, der aus zwei Paaren von seitlichen Ästen (1) gebildet wird, die die Räder tragen und von denen jeder mindestens zwei Festhalte- oder Rückhalteeinrichtungen (4, 5) aufweist, die winklig in Beziehung zu festen Achsen (6) angeordnet sind, um welche die beiden Arme (7) kippbar montiert sind, jeder Arm (7) aufgenommen wird in der einen oder anderen Rückhalteeinrichtung (4, 5) entsprechend der gewählten Lage der Umsteuerbarkeit, dadurch gekennzeichnet, daß die Festhalte- oder Rückhalteeinrichtungen (4, 5) Rinnen sind, die das Festhalten durch die Tätigkeit eines Clips sicherstellen, wobei jedes Rillenpaar mit einem seitlichen Flansch (3) verbunden ist.

2. Kinderwagen nach Anspruch 1, dadurch gekennzeichnet, daß jeder kippende Arm (7) einen Verriegelungshebel (10) trägt, der geeignet ist, nach Wahl in zwei Löcher (14, 15) Lagen der Umsteuerbarkeit des Armes entsprechen und in dem Flansch (3) in der Nachbarschaft der Rillen (4, 5) angebracht sind.

3. Umsteuerbare Kinderwagen zum Richtungswechsel, der erhalten wird durch Kippung zweier Arme (7), die zur Fortbewegung des Wagens dienen, wobei der Wagen einen Fußteil aufweist, der aus zwei Paaren von seitlichen Ästen (1) gebildet wird, die die Räder tragen und von denen jeder mindestens zwei Festhalte- oder Rückhalteeinrichtungen (26, 26A, 26B) aufweist, die winklig in Beziehung zu festen Achsen angeordnet sind, um die die beiden Arme (7) kippbar montiert sind, jeder Arm aufgenommen wird in der einen oder anderen Rückhalteeinrichtung entsprechend der gewählten Lage der Umsteuerbarkeit, dadurch gekennzeichnet, daß die Fortbewegungsarme (7) oder schwenkende Rohre auf einem (25) angelenkt sind, der von den Ästen (1) durchquert wird und der geeignet ist, bewegungsunfähig in der einen oder anderen der beiden Lagen der Umsteuerbarkeit zu sein, wobei die untere Verlängerung eines jeden Armes (7) über den zentralen Anschlag (25) hinaus sich mit einem der Äste (1) des Fußteiles trifft und jede Festhalte- oder Rück-Halteeinrichtung (26, 26A, 26B) vorgesehen ist am Punkt des Zusammentreffens von mindestens einem Ast (1) des Paares der Äste und des entsprechenden schwenkenden Armes (7).

4. Wagen nach Anspruch 3, dadurch gekennzeichnet, daß die Festhalte oder Rückhalteeinrichtungen (26, 26A, 26B) von der Art eines Clips sind.

5. Wagen nach einem der Ansprüche 3 und 4, dadurch gekennzeichnet, daß die Festhalte- oder Rückhalteeinrichtung gebildet wird durch eine Auskragungsstütze (26A), die von einem Loch (27) durchbohrt ist, das bestimmt ist zur Aufnahme des Endes des schwenkenden Armes (7) welcher zusätzlich zu seinem Kippen geeignet ist, über seine Länge verschoben zu werden.

6. Wagen nach einem der Ansprüche 3 bis 5, dadurch gekennzeichnet, daß die Äste (1) eines Paares der Äste befestigt sind auf dem Anschlag (25) und ihn jeweils durchqueren, wobei die obere Verlängerung (1A) der Äste die Stütze eines Längsträgers (16) des Schlafsackes oder der Gondel bilden und das andere Paar der Äste des Fußteiles schwenkbar montiert werden kann auf den zentralen Anschlägen (25) um die Achse (6) herum.

5

7. Wagen nach einem der Ansprüche 3 bis 6, dadurch gekennzeichnet, daß der schwenkende Arm (7) seine Schiebebewegung aufnimmt im inneren eines Hilfsanschlages (25A), der zum Schwenken auf dem Hauptanschlag (25) um die Achse (6A) herummontiert ist.

8. Wagen nach einem der Ansprüche 3 und 4, dadurch gekennzeichnet daß die Festhalte- oder Rückhalteeinrichtung auf dem Arm (7) vorgesehen ist und selbst schwenkt, wobei die Einrichtung (26B) doppelt ist von der Art, da sie sich entweder mit einem Ast (1) eines Paares von Ästen oder mit dem Ast (1) gegenüber dem anderen Paar der Äste treffen kann.

9. Wagen nach einem der Ansprüche 1 bis 8, dadurch gekennzeichnet, daß die Längsträger (16) zur Unterstützung des Schlafsackes oder der Gondel eine Einrichtung zur Regelung der winkelmäßigen Lage und der Feststellung in dieser Lage aufweisen.

0 063 058

FIG.5

FIG.5A

FIG.6

1

FIG.2

FIG.3

FIG.1

FIG.4A

FIG.4